# EUROPÄISCHE PATENTANMELDUNG

(11) **EP 1 410 980 A1**
(43) Veröffentlichungstag der Anmeldung: **21.04.2004**
(21) Anmeldenummer: 03007010.6
(22) Anmeldetag: 27.03.2003
(51) Int. Cl.: B62D 53/00, B62D 63/06

(54) **Kombination von Zugfahrzeug und Anhänger**

(30) Priorität: 17.10.2002 DE 10248580
(71) Anmelder: Gulba, Joachim, 74821 Mosbach (DE)
(72) Erfinder: Gulba, Joachim, 74821 Mosbach (DE)
(74) Vertreter: Naumann, Ulrich, Dr.-Ing.

(57) **Zusammenfassung**

Ein Anhänger (2) für ein Kraftfahrzeug (1), insbesondere für einen PKW, wobei der Anhänger (2) an das Kraftfahrzeug (1) ankoppelbar ist und wobei das Kraftfahrzeug (1) eine typenspezifische Karosserie (5) aufweist, ist im Hinblick auf die Aufgabe, eine hohe Gebrauchstauglichkeit eines Gespanns aus Kraftfahrzeug und Anhänger bei ansprechendem Erscheinungsbild zu gewährleisten, dadurch gekennzeichnet, dass zumindest die Heckpartie des Anhängers (2) in etwa der typenspezifischen Heckpartie des Kraftfahrzeugs (1) bzw. der Karosserie (5) angepasst ist.

## Beschreibung

Die Erfindung betrifft einen Anhänger für ein Kraftfahrzeug, insbesondere für einen PKW, wobei der Anhänger an das Kraftfahrzeug ankoppelbar ist und wobei das Kraftfahrzeug eine typenspezifische Karosserie aufweist.

Anhänger dieser Art sind aus der Praxis bereits bekannt. Die den Kraftfahrzeugen zugeordneten Anhänger werden für viele Zwecke verwendet, insbesondere jedoch um Lasten zu transportieren, die mit dem Kraftfahrzeug nur unter erheblichen Umständen oder gar nicht transportierbar sind.

Die Anhänger werden dabei meist über eine Kupplung reversibel mit einem Kraftfahrzeug gekoppelt, so dass der Anhänger quasi als externer Kofferraum oder Dachgepäckträger dient. Gerade bei Kraftfahrzeugen, die wenig Stauraum oder ein geringes Kofferraumvolumen aufweisen, sind Anhänger oftmals unentbehrlich, um sperrige Lasten zu transportieren. Dies ist insbesondere problematisch bei Urlaubsreisen, auf denen Fahrräder, Koffer oder ähnlich sperrige Gegenstände mitgeführt werden sollen.

Zwar können die bekannten Anhänger genügend Raum zur Verfügung stellen, um sperrige Gegenstände zu transportieren, jedoch werden sie von einem Fahrzeughalter oftmals nur als Notlösung herangezogen, da sie in Kombination mit dem Kraftfahrzeug, oftmals einem PKW, ein in aerodynamischer Hinsicht äußerst unvorteilhaftes Gespann bilden. Darüber hinaus ist nachteilig, dass Anhänger aufgrund ihres Aufbaus, meist eine funktionelle Ladefläche auf einem Fahrgestell, mit einem Kraftfahrzeug in ästhetischer Hinsicht nicht harmonieren. Insofern entstehen bei Kopplung der bekannten Anhänger mit Kraftfahrzeugen beliebiger Art und Marke Gespanne, die sowohl in aerodynamischer als auch in ästhetischer Hinsicht erhebliche Nachteile aufweisen.

Der vorliegenden Erfindung liegt daher die Aufgabe zugrunde, einen Anhänger der eingangs genannten Art derart auszugestalten und weiterzubilden, dass eine hohe Gebrauchstauglichkeit bei ansprechendem Erscheinungsbild eines Gespanns aus Kraftfahrzeug und Anhänger gewährleistet ist.

Erfindungsgemäß wird die voranstehende Aufgabe hinsichtlich eines Anhängers mit den Merkmalen des Patentanspruchs 1 gelöst. Danach ist ein Anhänger der eingangs genannten Art dadurch gekennzeichnet, dass zumindest die Heckpartie des Anhängers in etwa der typenspezifischen Heckpartie des Kraftfahrzeugs bzw. der Karosserie angepasst ist.

In erfindungsgemäßer Weise ist erkannt worden, dass eine Nachbildung der Heckpartie des Anhängers ein äußerst ansprechendes Erscheinungsbild des Gespanns bewirkt, da das Kraftfahrzeug und der Anhänger in optisch ästhetischer Weise harmonieren. Darüber hinaus ist erkannt worden, dass die Anpassung der Heckpartie des Anhängers auf das aerodynamische Verhalten des Gespanns aus Kraftfahrzeug und Anhänger eine außerordentlich günstige Auswirkung hat, da Verwirbelungen und Strömungsabrisse aufgrund in etwa aufeinander abgestimmter Heckpartien vermieden werden.

Folglich ist ein Anhänger angegeben, welcher eine hohe Gebrauchstauglichkeit eines Gespanns aus Kraftfahrzeug und Anhänger bei ansprechendem Erscheinungsbild gewährleistet.

In ganz besonders vorteilhafter Weise könnte der Anhänger eine Karosserie aufweisen. Hierdurch ist der Anhänger hinsichtlich vieler Details auf die Karosserie des Kraftfahrzeugs abstimmbar.

In ganz besonders vorteilhafter Weise könnte die Karosserie des Anhängers mit der Seitenpartie der Karosserie des Kraftfahrzeugs in Draufsicht auf das Heck fluchten. Durch diese konkrete Ausgestaltung können sich längsseits der Karosserie Stromlinien der Luftströmung ausbilden, was zu einem besonders günstigen aerodynamischen Verhalten führt.

Die Karosserie des Anhängers könnte mit der Dachpartie der Karosserie des Kraftfahrzeugs in Draufsicht auf das Heck fluchten. Durch diese konkrete Ausgestaltung ist gewährleistet, dass sich längs des Daches des Kraftfahrzeuges und des Anhängers Stromlinien ausbilden können. Strömungsabrisse werden wirkungsvoll vermieden, so dass das Gespann insgesamt einen besonders geringen Luftwiderstand erfährt. Dies drückt sich insbesondere vorteilhaft in geringen Treibstoffkosten und ruhigerem Fahrverhalten aus.

In besonders vorteilhafter Weise könnte die Karosserie des Anhängers eine Dachreling aufweisen. Durch diese konkrete Ausgestaltung ist gewährleistet, dass beispielsweise Skier, Koffer oder ähnliche Gegenstände vom Dach des Kraftfahrzeugs entfernt und auf den Anhänger verlagert werden können. Selbstverständlich ist auch denkbar, dass sowohl das Kraftfahrzeug als auch der Anhänger eine Dachreling aufweisen, die auf gleicher Höhe verläuft und mit Gepäck belastbar ist.

Die Karosserie des Anhängers könnte einen Dachgepäckträger aufweisen. Durch diese konkrete Ausgestaltung ist möglich, dass auch besonders sperrige Gegenstände wie Fahrräder problemlos mit dem Anhänger transportierbar sind.

Die Karosserie des Anhängers könnte ein im Sinne eines Kofferraumdeckels aufklappbares Dach aufweisen. Hierbei ist selbstverständlich denkbar, dass das Dach entweder in üblicher Weise in Richtung des Kraftfahrzeugs oder von diesem weg aufklappbar ist. In jedem Falle wird durch ein aufklappbares Dach gewährleistet, dass der Anhänger in gängiger Weise beladen werden kann und dem Gepäck einen wirkungsvollen Schutz gegen Witterungseinflüsse bietet. Durch die Vorkehrung eines im Sinne eines Kofferraumdeckels aufklappbaren Daches wird der einheitliche Eindruck des Gespanns aus Kraftfahrzeug und Anhänger verstärkt, da der Anhänger quasi als externer Kofferraum dient.

Die Karosserie des Anhängers könnte ein aufschiebbares Dach aufweisen. Die Vorkehrung eines aufschiebbaren Daches ist dahingehend vorteilhaft, dass die gesamte Ladefläche des Anhängers freigelegt werden kann und somit auch besonders sperrige Gegenstände von mindestens drei Seiten eingeladen werden können. Das Dach könnte manuell oder maschinell aufschiebbar sein. Denkbar ist hierbei auch, dass das Dach sowohl aufschiebbar als auch aufklappbar ist. Dies könnte dadurch realisiert werden, dass das Dach in Schienen verläuft, die insgesamt aufklappbar sind. Durch diese Ausgestaltung ist eine größtmögliche Anpassungsfähigkeit des Anhängers an komplizierte Beladungsvorgänge gegeben.

Das Dach des Anhängers könnte mit dem des Kraftfahrzeugs identisch sein. Hierbei ist insbesondere denkbar, dass eventuelle Krümmungen oder andere Charakteristika des Dachs des Kraftfahrzeugs auch beim Anhänger vorgesehen sind. Durch diese konkrete Ausgestaltung wird der einheitliche Eindruck des Gespanns aus Kraftfahrzeug und Anhänger in besonders deutlicher Weise vermittelt.

Die Leuchten und Blinker des Anhängers könnten mit denen des Kraftfahrzeugs identisch sein. Hierbei ist selbstverständlich denkbar, dass Blinker, die an den Seitenfronten der Karosserie des Kraftfahrzeugs angeordnet sind, auch an den Seitenfronten des Anhängers angeordnet sind. In ganz besonders raffinierter Weise wird durch diese konkrete Ausgestaltung realisiert, dass einem Betrachter auch bei Nacht durch die charakteristische Beleuchtung der gewünschte Effekt eines einheitlichen Erscheinungsbilds vermittelt wird.

Die Stoßstangen des Anhängers könnten mit denen des Kraftfahrzeugs identisch sein. Darüber hinaus könnten die Stoßstangen des Anhängers mit denen des Kraftfahrzeugs auf gleicher Höhe sein. Durch diese konkrete Ausgestaltung ist nicht nur realisiert, dass das Gespann aus Kraftfahrzeug und Anhänger ein einheitliches Bild bietet, vielmehr ist sichergestellt, dass im Falle einer Kollision mit einem anderen Fahrzeug der Anhänger genauso geschützt ist wie das Kraftfahrzeug.

Der Radstand des Anhängers könnte mit dem des Kraftfahrzeugs identisch sein. Hierdurch ist gewährleistet, dass ein Betrachter sowohl in frontaler Draufsicht als auch in Draufsicht von der Heckseite stets nur zwei Räder wahrnimmt. Vor diesem Hintergrund könnten die Räder des Anhängers die gleiche Breite und den gleichen Durchmesser wie die des Kraftfahrzeugs aufweisen, wodurch der Effekt eines einheitlichen Bilds des Gespanns zusätzlich verstärkt wird.

In besonders raffinierter Weise könnte der Abstand der Achse des Anhängers zur Hinterachse des Kraftfahrzeugs mit dem Abstand der Achsen des Kraftfahrzeugs identisch sein. Durch diese konkrete Ausgestaltung wird der optische Eindruck eines dreiachsigen Fahrzeugs vermittelt, das sich durch eine besondere Symmetrie auszeichnet.

Die Kotflügel des Anhängers könnten mit denen des Kraftfahrzeugs identisch sein. Hierbei ist selbstverständlich denkbar, dass die Räder von den Kotflügeln teilweise verdeckt werden oder in geschwungenen Ausnehmungen der Kotflügel aufgenommen werden. Diese konkrete Ausgestaltung bewirkt, dass das Gespann aus Anhänger und Kraftfahrzeug auch in einer Seitenansicht ein einheitliches Bild bietet.

Die Zierleisten des Anhängers könnten mit denen des Kraftfahrzeugs auf einer Höhe liegen und eine unterbrochene Linie bilden. Die Unterbrechung kommt dadurch zustande, dass im Kopplungsbereich zwischen Kraftfahrzeug und Anhänger ein Zwischenraum entsteht. Insgesamt wird durch die konkrete Anordnung der Zierleisten ein besonders hochwertiges Bild des Gespanns bei einer Seitenansicht sowie ein besonders elegantes Äußeres vermittelt.

Die Farbe des Anhängers könnte mit der des Kraftfahrzeugs identisch sein. Das Vorsehen der gleichen Farbe sowohl beim Kraftfahrzeug als auch beim Anhänger trägt ganz wesentlich zum einheitlichen und optisch ansprechenden Erscheinungsbild des Gespanns bei.

Die Karosserie des Anhängers könnte bewegliche Teile zum Verdecken des Kopplungsbereichs zwischen Kraftfahrzeug und Anhänger aufweisen. Hierdurch ist in besonders raffinierter Weise gewährleistet, dass ein üblicherweise entstehender Zwischenraum zwischen Kraftfahrzeug und Anhänger verdeckt wird, so dass das Gespann ein integrales und kompaktes Äußeres erhält.

Der Anhänger oder dessen Karosserie könnten aus Originalteilen der Karosserie des Fahrzeugs gefertigt sein. Hierdurch ist gewährleistet, dass der Aufbau des Anhängers besonders kostengünstig und authentisch ausgeführt werden kann.

Die Originalteile könnten Leuchten, Blinker, Stoßstangen oder Zierleisten umfassen. Die Verwendung dieser Einzelteile eignet sich besonders zur Fertigung eines mit dem Kraftfahrzeug optisch ähnlichen Anhängers, da sie einem Fahrzeug sein charakteristisches Aussehen verleihen.

Der Anhänger könnte mehrere Achsen aufweisen. Die Vorkehrung mehrerer Achsen hat den Vorteil, dass auch längere Anhänger, die zum Transport schwerer Gegenstände geeignet sind, verwendet werden können.

Der Achsenabstand könnte dem des Kraftfahrzeugs entsprechen. Bei dieser konkreten Ausgestaltung wird letztlich nahezu eine Verdoppelung der Länge des Kraftfahrzeugs bewirkt, was dem gesamten Gespann ein besonders großes Transportvermögen verleiht.

Der Anhänger könnte mindestens eine lenkbare Achse umfassen. Hierdurch ist vorteilhaft gewährleistet, dass insbesondere ein längeres Gespann sicher auch auf engeren Straßen bewegt werden kann.

Der Anhänger könnte dieselbe Bodenfreiheit wie das Kraftfahrzeug aufweisen. Diese konkrete Ausgestaltung hat neben einem integralen und einheitlichen Erscheinungsbild des Gespanns den Vorteil, dass Bodenunebenheiten oder Hindernisse auf der Fahrbahn vom Fahrer ohne Rücksicht auf die Bodenfreiheit des Anhängers bewertet werden können.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels des erfindungsgemäßen Anhängers anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert. In der Zeichnung zeigt die einzige
- Fig.: in einer schematischen Ansicht ein Ausführungsbeispiel des erfindungsgemäßen Anhängers.

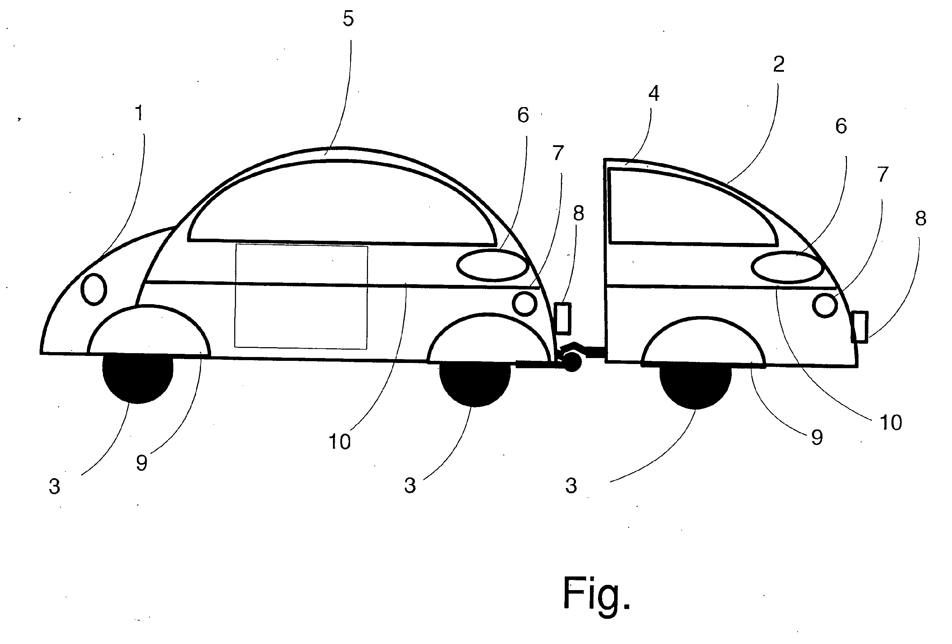

Fig. 1 zeigt ein Kraftfahrzeug 1 mit einem Anhänger 2, wobei das Kraftfahrzeug 1 mit dem Anhänger 2 gekoppelt ist. Sowohl der Anhänger 2 als auch das Kraftfahrzeug 1 umfassen Räder 3 und jeweils eine Karosserie 4 bzw. 5. Die Karosserie 4 des Anhängers 2 ist sowohl der Heckpartie als auch der Seiten- und Dachpartie der Karosserie 5 des Kraftfahrzeugs 1 in optischer Hinsicht nachgebildet.

Die Karosserie 5 des Anhängers 2 fluchtet mit der Seitenpartie und der Dachpartie der Karosserie 4 des Kraftfahrzeugs 1 in Draufsicht auf das Heck.

Die Leuchten 6 und Blinker 7 des Anhängers 2 sind mit denen des Kraftfahrzeugs 1 identisch. Die Stoßstangen 8 des Anhängers 2 sind mit denen des Kraftfahrzeugs 1 identisch und auf gleicher Höhe angeordnet. Die Räder 3 des Anhängers 2 haben die gleiche Breite wie die des Kraftfahrzeugs 1. Die Kotflügel 9 des Anhängers 2 sind mit denen des Kraftfahrzeugs 1 identisch.

Die Zierleisten 10 des Anhängers 2 liegen mit denen des Kraftfahrzeugs 1 auf einer Höhe und bilden eine unterbrochene Linie. Der Anhänger 2 weist dieselbe Bodenfreiheit wie das Kraftfahrzeug 1 auf.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

## Patentansprüche

1. Anhänger (2) für ein Kraftfahrzeug (1), insbesondere für einen PKW, wobei der Anhänger (2) an das Kraftfahrzeug (1) ankoppelbar ist und wobei das Kraftfahrzeug (1) eine typenspezifische Karosserie (5) aufweist,
**dadurch gekennzeichnet, dass** zumindest die Heckpartie des Anhängers (2) in etwa der typenspezifischen Heckpartie des Kraftfahrzeugs (1) bzw. der Karosserie (5) angepasst ist.

2. Anhänger nach Anspruch 1, **gekennzeichnet durch** eine Karosserie (4), die vorzugsweise mit den Seitenpartien der Karosserie (5) des Kraftfahrzeugs (1) in Draufsicht auf das Heck fluchtet.

3. Anhänger nach Anspruch 1 oder 2, **dadurch gekennzeichnet, dass** die Karosserie (4) des Anhängers (2) mit der Dachpartie der Karosserie (5) des Kraftfahrzeugs (1) in Draufsicht auf das Heck fluchtet.

4. Anhänger nach einem der Ansprüche 1 bis 3, **dadurch gekennzeichnet, dass** die Karosserie (4) eine Dachreling und/oder einen Dachgepäckträger und/oder ein im Sinne eines Kofferraumdeckels aufklappbares Dach und/oder ein aufschiebbares Dach, wobei das Dach mit dem des Kraftfahrzeugs (1) identisch sein kann.

5. Anhänger nach einem der Ansprüche 1 bis 4, **gekennzeichnet durch** Leuchten (6), Blinker (7) und/oder Stoßstangen (8) und/oder einen Radstand und/oder Kotflügel (9) und/oder eine Farbe, der beziehungsweise die mit dem beziehungsweise denen des Kraftfahrzeugs (1) identisch ist beziehungsweise sind, wobei die Stoßstangen in (8) mit denen des Kraftfahrzeugs (1) auf gleicher Höhe sein können und wobei die Räder (3) des Anhängers die gleiche Breite wie die des Kraftfahrzeugs (1) aufweisen können.

6. Anhänger nach einem der Ansprüche 1 bis 5, **gekennzeichnet durch** Zierleisten (10), die mit denen des Kraftfahrzeugs (1) auf einer Höhe liegen und eine unterbrochene Linie bilden.

7. Anhänger nach einem der Ansprüche 1 bis 6, **dadurch gekennzeichnet, dass** die Karosserie (4) vorzugsweise bewegliche Teile zum Verdecken des Kopplungsbereichs zwischen Kraftfahrzeug (1) und Anhänger (2) aufweist.

8. Anhänger nach einem der Ansprüche 1 bis 7, **dadurch gekennzeichnet, dass** die Karosserie (4) aus Originalteilen der Karosserie (5) des Kraftfahrzeugs (1) gefertigt ist, wobei die Originalteile Leuchten (6), Blinker (7), Stoßstangen (8) oder Zierleisten (10) umfassen können.

9. Anhänger nach einem der Ansprüche 1 bis 20, **gekennzeichnet durch** mehrere Achsen, wobei der Achsenabstand dem des Kraftfahrzeugs (1) entspricht und/oder wobei mindestens eine Achse lenkbar ist.

10. Anhänger nach einem der Ansprüche 1 bis 9, **gekennzeichnet durch** eine Bodenfreiheit, die der des Kraftfahrzeugs (1) entspricht.
